# EUROPEAN PATENT APPLICATION

(11) **EP 4 486 036 A1**
(43) Date of publication of application: **01.01.2025**
(21) Application number: 23775302.5
(22) Date of filing: 22.03.2023
(51) Int. Cl.: H04W 72/12, H04W 72/23, H04L 5/00

(54) **METHOD AND DEVICE FOR SCHEDULING DATA CHANNEL IN WIRELESS COMMUNICATION SYSTEM**

(30) Priority: 23.03.2022 KR 20220036325; 20.03.2023 KR 20230035794
(71) Applicant: KT Corporation, Seongnam-si, Gyeonggi-do 13606 (KR)
(72) Inventor: PARK, Kyujin, Seongnam-si, Gyeonggi-do 13606 (KR)
(74) Representative: BCKIP Part mbB
(86) International application number: PCT/KR2023/003798
(87) International publication number: WO 2023/182806

(57) **Abstract**

Provided are a method and a device for transmitting and receiving downlink control information in a wireless communication system. A base station transmits, to a terminal, configuration information of multiple cells scheduled through a single DCI, and the terminal receives the single DCI for the multiple cells on the basis of the received configuration information. Thereafter, downlink data channel reception and/or uplink data channel transmission is performed on the basis of the received the single DCI, wherein the number of the multiple cells is less than or equal to a maximum number of cells which can be scheduled through the single DCI.

## Description

### Technical Field

The present disclosure relates to a 3GPP 5G NR system.

### Background Art

As more communication devices require greater communication traffic, necessity for a next generation 5G system corresponding to mobile broadband communication, which is enhanced compared to a legacy LTE system, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having such characteristics such as ultra-reliable, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure of the present specification is to provide a method and device for transmitting and receiving downlink control information (DCI) to schedule a data channel in a wireless communication system.

### Solution to Problem

An embodiment of the present specification provides a method for a terminal in a wireless communication system to: receive configuration information of multiple cells to be scheduled through single downlink control information (DCI), receive the single DCI for the multiple cells, based on the received configuration information, and receive a downlink data channel and/or transmit an uplink data channel based on the received single DCI, wherein the number of multiple cells is smaller than or equal to a maximum number of cells to be scheduled through the single DCI.

Further, an embodiment of the disclosure provides a method for a base station in a wireless communication system to transmit configuration information for identifying multiple cells to be scheduled through single downlink control information (DCI), transmit the single DCI for the multiple cells, and transmit a downlink data channel and/or receive an uplink data channel, wherein the number of multiple cells is smaller than or equal to a maximum number of cells to be scheduled through the single DCI.

Further, an embodiment of the disclosure provides a communication device in a wireless communication system, including at least one processor; and at least one memory configured to store instructions and operably electrically connectable to the at least one processor, wherein operations performed based on the instructions executed by the at least one processor include: receiving configuration information of multiple cells to be scheduled through single downlink control information (DCI); receiving the single DCI for the multiple cells, based on the received configuration information; and receiving a downlink data channel and/or transmitting an uplink data channel based on the received single DCI, wherein the number of multiple cells is smaller than or equal to a maximum number of cells to be scheduled through the single DCI

Further, an embodiment of the disclosure provides a base station in a wireless communication system, including: at least one processor; and at least one memory configured to store instructions and operably electrically connectable to the at least one processor, wherein operations performed based on the instructions executed by the at least one processor include: transmitting configuration information for identifying multiple cells to be scheduled through single downlink control information (DCI); transmitting the single DCI for the multiple cells, after transmitting the configuration information; and transmitting a downlink data channel and/or receiving an uplink data channel, after transmitting the single DCI, wherein the number of multiple cells is smaller than or equal to a maximum number of cells to be scheduled through the single DCI.

Further, an embodiment of the disclosure provides a computer readable storage medium storing instructions that, when executed by one or more processors, cause the one or more processors to: receive configuration information of multiple cells to be scheduled through single downlink control information (DCI); receive the single DCI for the multiple cells, based on the received configuration information; and receive a downlink data channel and/or transmit an uplink data channel based on the received single DCI, wherein the number of multiple cells is smaller than or equal to a maximum number of cells to be scheduled through the single DCI.

The single DCI may include information identifying the multiple cells. Here, the information identifying the multiple cells may include cell group indication information that indicates the multiple cells, and the information identifying the multiple cells may be bitmap-based information.

The configuration information of the multiple cells may be received through a radio source control (RRC) message.

A payload size of the single DCI may be based on the maximum number of cells to be scheduled through the single DCI.

### Advantageous Effects of Invention

According to a disclosure of the present specification, a data channel is efficiently scheduled in a wireless communication system.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIG. 7 illustrates cross-carrier scheduling in a carrier aggregation system.
FIG. 8 illustrates an operation method of a terminal according to an embodiment of the present specification.
FIG. 9 illustrates an operation method of a base station according to an embodiment of the present specification.
FIG. 10 shows apparatuses according to an embodiment of the disclosure.
FIG. 11 is a block diagram showing a configuration of a terminal according to an embodiment of the disclosure.
FIG. 12 is a configuration block diagram of a processor in which the disclosure is implemented.
FIG. 13 is a detailed block diagram of a transceiver of a first apparatus shown in FIG. 10 or a transceiving unit of an apparatus shown in FIG. 11.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms that can be exactly understood by those skilled in the art. Further, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure, and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may also be referred to as a terminal, mobile equipment (ME), or the like. In addition, the UE may be a portable device such as a laptop computer, a mobile phone, a PDA, a smart phone, a multimedia device, or the like, or it may be a non-portable device such as a PC or a vehicle-mounted device.

Hereinafter, the UE is used as an example of a device capable of wireless communication (eg, a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long-term evolution (LTE) /LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, for example, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, and augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at lower latency and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types, FR1 and FR2, may, for example, be shown in Table 1 below. For convenience of description, FR1, among the frequency ranges used in the NR system may refer to a Sub-6 GHz range, and the FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. A RS, also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

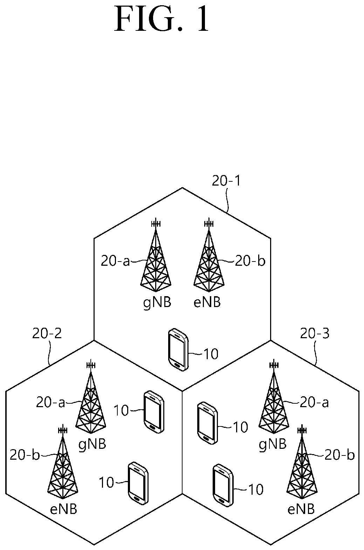

**FIG. 1** **illustrates a wireless communication system.**

As can be seen with reference to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A UE typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

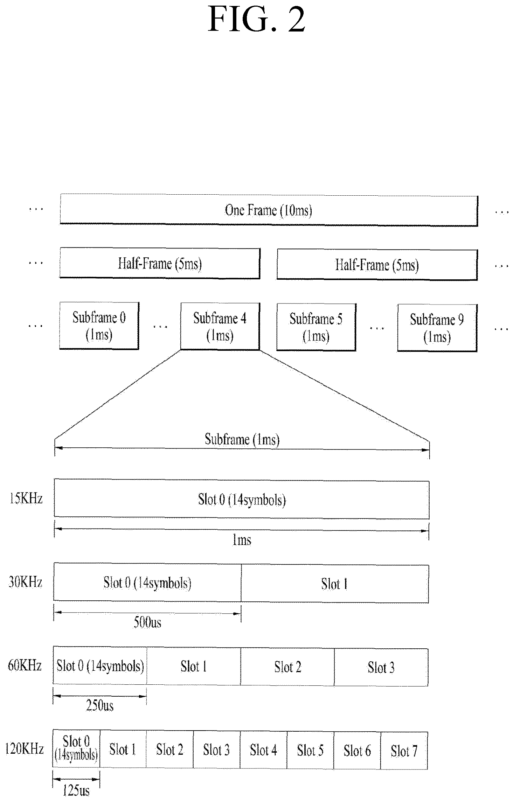

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol) .

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a SCS. A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot} _{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

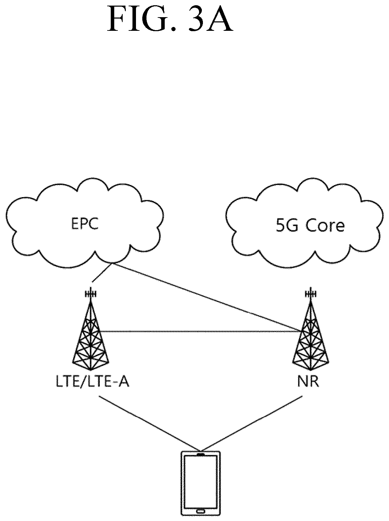

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

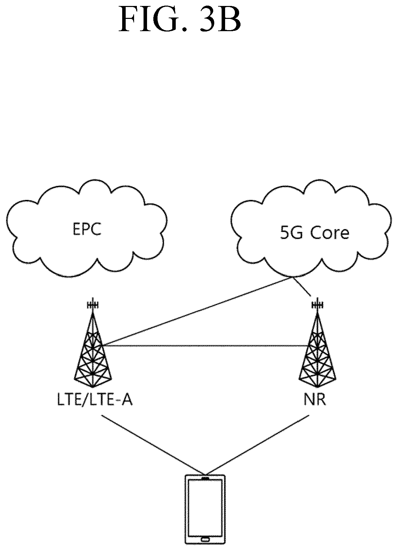

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

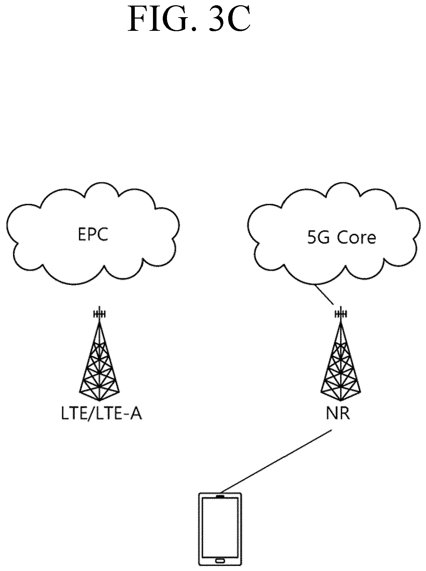

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

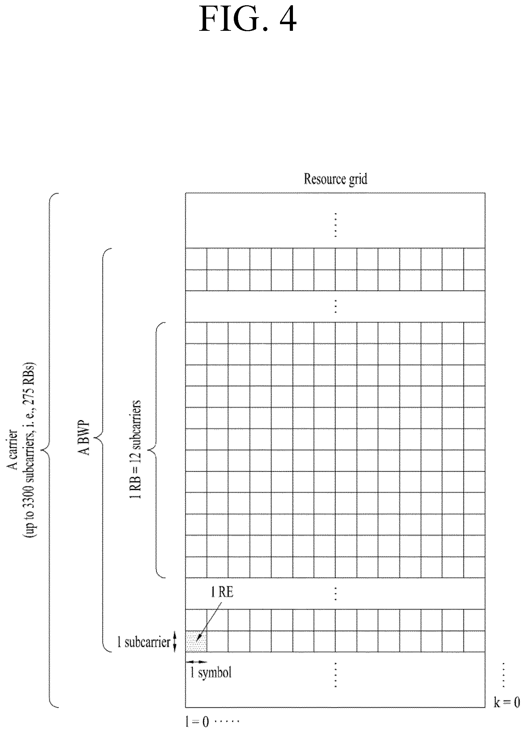

**FIG. 4** **illustrates a slot structure of an NR frame.**

A slot includes a plurality of symbols in the time domain. For example, in the case of a normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as consecutive physical (P)RBs in the frequency domain and may correspond to one numerology (e.g., SCS, CP length, etc.). A UE may be configured with up to N (e.g., five) BWPs in both downlink and uplink. The downlink or uplink transmission is performed through an activated BWP, and only one BWP among the BWPs configured for the UE may be activated at a given time. In the resource grid, each element is referred to as a resource element (RE), and one complex symbol may be mapped to it.

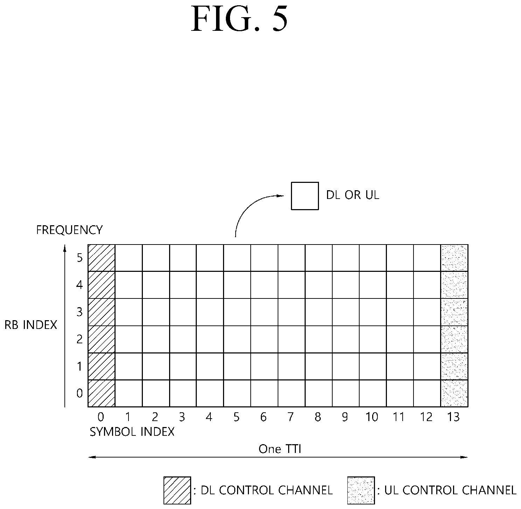

**FIG. 5** **shows an example of a subframe type in NR.**

A TTI (Transmission Time Interval) shown in FIG. 5 may be called a subframe or a slot for NR (or new RAT). The subframe (or slot) shown in FIG. 5 may be used in a TDD system of NR (or new RAT) to minimize data transmission delay. As shown in FIG. 5, a subframe (or slot) includes 14 symbols. The symbol at the head of the subframe (or slot) may be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as the data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

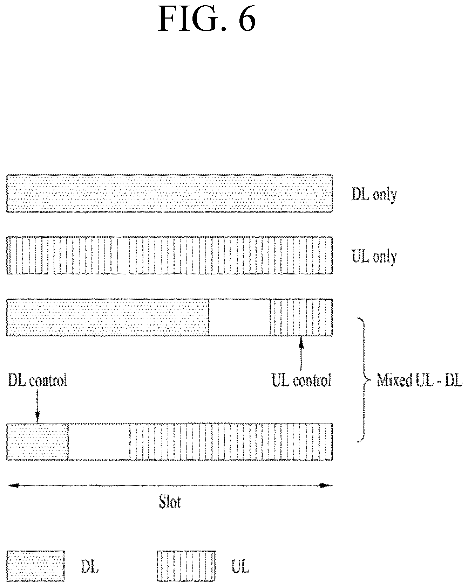

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as a UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Carrier Aggregation (CA)>

The system frequency band of a wireless communication system is divided into a plurality of carrier frequencies. Here, the carrier frequency refers to the center frequency of a cell.

A carrier aggregation system will be described.

The carrier aggregation system refers to the aggregation of multiple component carriers (CC). Through the carrier aggregation, the meaning of the existing cell may be changed. In the carrier aggregation, a cell may refer to a combination of a downlink component carrier and an uplink component carrier, or a single downlink (or uplink) component carrier.

Further, in the carrier aggregation, a serving cell may be divided into a primary cell and a secondary cell. The primary cell refers to a cell operating on a primary frequency, in which the UE either performs an initial connection establishment procedure or initiates the connection re-establishment procedure, or a cell indicated as the primary cell in a handover procedure. The secondary cell refers to a cell operating on a secondary frequency, which is used to provide additional radio resources once a radio resource control (RRC) connection is established.

The carrier aggregation system may support the cross-carrier scheduling. The cross-carrier scheduling refers to a scheduling method capable of performing resource allocation of a PDSCH transmitted by a different component carrier through a PDCCH transmitted through a specific CC and/or resource allocation of a PUSCH transmitted by another CC other than a CC primarily linked to the specific CC. That is, the PDCCH and the PDSCH may be transmitted through different DL CCs, and the PUSCH may be transmitted through a UL CC other than a UL CC linked to a DL CC on which a PDCCH including a UL grant is transmitted. In such a system supporting cross-carrier scheduling, a carrier indicator is required to indicate which DL CC/UL CC is used to transmit the PDSCH/PUSCH for which control information is provided through the PDCCH. Hereinafter, a field including the carrier indicator will be referred to as a carrier indication field (CIF).

The carrier aggregation system supporting the cross-carrier scheduling may include the CIF in a typical DCI format. In the system of supporting the cross-carrier scheduling, for example, the LTE-A system, the existing DCI format (i.e., the DCI format used in LTE) may be extended by 3 bits because the CIF is added, and a PDCCH structure may reuse the existing coding method, the existing resource allocation method (i.e., CCE-based resource mapping), and so on.

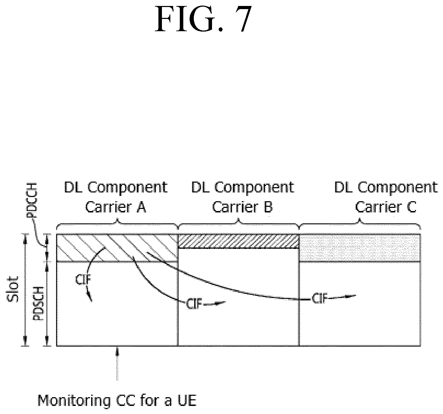

**FIG. 7** **illustrates cross-carrier scheduling in a carrier aggregation system.**

Referring to FIG. 7, the base station may configure a PDCCH monitoring DL CC (monitoring CC) set. The PDCCH monitoring DL CC set consists of some DL CCs among all aggregated DL CCs. When cross-carrier scheduling is configured, a UE performs PDCCH monitoring/decoding only for the DL CC included in the PDCCH monitoring DL CC set. In other words, the base station uses only the DL CCs included in the PDCCH monitoring DL CC set to transmit the PDCCH for the PDSCH/PUSCH to be scheduled. The PDCCH monitoring DL CC set may be configured in a UE-specific, UE group-specific, or cell-specific manner.

FIG. 7 shows an example where three DL CCs (e.g., DL CC A, DL CC B, and DL CC C) are aggregated, and the DL CC A is configured as the PDCCH monitoring DL CC. The UE may receive scheduling information (i.e., the DCI including a DL grant) for the PDSCH of the DL CC A, DL CC B, and DL CC C through the PDCCH of the DL CC A. The DCI transmitted through the PDCCH of the DL CC A may include the CIF to indicate which DL CC the DCI is for.

### <Problems to be solved by the disclosure of the present specification>

In the typical LTE or NR wireless mobile communication system, radio resource allocation information, i.e., scheduling control information for PDSCH or PUSCH transmission and reception in one cell or carrier is transmitted as encoded with separate DCI. In other words, when carrier aggregation (CA) is applied to any terminal, the scheduling DCI for the PDSCH or PUSCH transmitted on each aggregated carrier or cell may be transmitted through a separate PDCCH. For example, when frequency aggregation for the cell/carrier #A and the cell/carrier #B is configured and activated for any one terminal, each of the scheduling control information for PDSCH #1 and PDSCH #2 transmitted on each of that cell #A and that cell #B is separately configured for each of DCI #1 and DCI #2 and transmitted through each of PDCCH #1 and PDCCH #2.

Meanwhile, for the efficient migration from the LTE to NR, dynamic spectrum sharing (DSS) technology, which allows some radio resources in any LTE frequency band to be used for transceiving NR signals, has been partially designed through the 3GPP Release 15 as described above, and enhanced in Release 16 and Release 17.

The DSS may be implemented by using some resources of certain LTE DL subframes in the LTE frequency band for the NR PDCCH, PDSCH and DM RS transmission, using some resources of the LTE UL subframes for the NR PUSCH, PUCCH and DM RS transmission, among others.

In particular, the LTE frequency band is often configured in a low frequency band compared to that of NR and therefore one base station is capable of supporting wider cell coverage in terms of cell coverage. On the other hand, NR cells configured in a high frequency band may be suitable for small cells for data boosting. In such a cell deployment scenario, the NR cells configured based on the DSS in the LTE band for any terminal may be configured as the primary cell (PCell), and the NR cells configured in the NR frequency band may be configured as the secondary cell (SCell).

In this way, when any DSS-based carrier or cell supporting both LTE/NR transmits both the LTE PDCCH and the NR PDCCH, or when the CA for a plurality of cells is configured or activated for any terminal to transmit bulk data, there is a need to consider how to enhance the spectral efficiency in the PDCCH transmission. In particular, when the scheduling control information for each PDSCH or PUSCH transmission is individually transmitted, there may be problems of insufficient PDCCH capacity, low spectral efficiency due to frequency waste from redundant transmission of some pieces of the same information (e.g., CRC, etc.).

### <Disclosures of the present specification>

Accordingly, to solve the foregoing problems, the present specification introduces a method and device for allocating PDSCH or PUSCH for one or more cells using a single DCI when a terminal is configured for CA.

### I. First disclosure: Method of dynamically scheduling multiple cells based on a cell group indicator

By grouping the cells that can be scheduled through a single DCI, multi-cell scheduling may be supported for the cells that belong to the same group. In other words, the cells that can be scheduled simultaneously may be grouped. Therefore, a single DCI transmitted to a terminal may include scheduling information for a group that includes the cells.

To this end, as an example of the cell grouping, cross-carrier scheduling may group a scheduling cell that performs scheduling and a scheduled cell that is scheduled as one group. For example, when the number of cells that can be scheduled through a single DCI is two, one cell may be the scheduling cell capable of scheduling for the DCI transmission and the other cell may be the scheduled cell scheduled for the data channel by the scheduling cell.

Specifically, according to the typical cross-carrier scheduling under the CA condition, one secondary cell (SCell) may be scheduled for the data channel by a primary cell (PCell) or another SCell capable of scheduling (i.e., a scheduling SCell). In other words, according to the typical method of configuring the cross-carrier scheduling, any SCell may serve as a scheduling cell that is capable of scheduling, which transmits the PDCCH including the scheduling control information of the PDSCH/PUSCH transmitted through another SCell. Alternatively, any SCell may serve as a scheduled cell which is scheduled by the scheduling cell, in which the PDCCH including the scheduling control information of the PDSCH/PUSCH is transmitted through another SCell, PCell or primary secondary cell group (SCG) cell (PSCell).

The cross-carrier scheduling may be configured for any SCell through an RRC message. The following Table 5 shows an example of an RRC message format for configuring the cross-carrier scheduling. According to the typical method of configuring the cross-carrier scheduling, the configuration values for the PCell and the PSCell in `schedulingCellInfo' were limited to `own', and it was thus possible to operate the PCell and PSCell as the cells (i.e., the scheduling cells) capable of scheduling other cells. However, the operations of the PCell and the PSCell as scheduled cells which are subjected to the cross-carrier scheduling by other Scells, were restricted.

### CrossCarrierSchedulingConfig information element

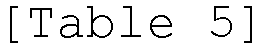

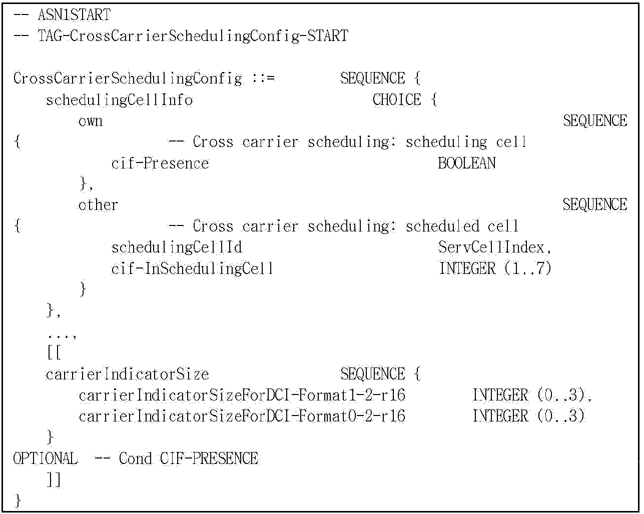

In case that a terminal is configured for CA, cross-carrier scheduling configuration information of each cell may be configured to indicate whether to transmit the scheduling control information for a corresponding cell through the corresponding cell (i.e., a self-scheduling method in which the scheduling cell is configured as 'own') or whether to transmit the scheduling control information for the corresponding cell through another cell (e.g.,, a cross-carrier scheduling method in which the scheduling cell is configured as 'other').

Further, when a cell is set to 'own', the cif-Presence may be configured to indicate whether to transmit the scheduling control information for other cells through that cell, i.e., whether to operate as a scheduling cell based on the cross-carrier scheduling configuration.

This disclosure introduces a method of supporting multi-cell scheduling through 1:1 grouping of a scheduling cell and a scheduled cell.

In accordance with an embodiment, when a cell is configured as a scheduling cell, multi(-cell) carrier indicator field (mcif)-Presence may be additionally configured to define whether to support the multi-cell scheduling. In other words, when a cell is configured as the scheduling cell and the mcif-Presecnce is configured, the scheduling DCI (i.e., the DL assignment DCI or UL grant DCI) transmitted through the scheduling cell includes an mcif information area. The mcif refers to information (or an information area) indicating whether the scheduling DCI includes multi-cell scheduling information. Here, 'mcif' is merely an exemplary term, and may be replaced by a group carrier indicator field (gcif).

For example, when the mcif is configured (i.e., when the mcif is set to '1'), the corresponding DCI may be defined to include resource allocation information for the scheduling cell in addition to resource allocation information for the scheduled cell configured by the cif.

In more detail, for example, in case where a cell A, a cell B, and a cell C are configured in associated with a terminal, the cell A may be configured as a scheduling cell, and the cell B and the cell C may be configured as scheduled cells to be scheduled by the cell A (i.e., the scheduled cells). Further, the base station may configure the mcif-presence based on the cross-carrier scheduling configuration information for the cell A. When the mcif-presence is configured for the cell A, the mcif-presence may be defined to include mcif in the scheduling DCI transmitted through the cell A and perform the multi-cell scheduling based on a combination of the mcif and the cif. In other words, cif indicates whether that scheduling DCI is the scheduling information for the cell A, the scheduling information for the cell B, or the scheduling information for the cell C. When the scheduling information is for the cell B or the cell C, the mcif may be defined to additionally indicate whether that scheduling information is single cell scheduling information for the cell B or cell C or whether that scheduling information is multi-cell scheduling information for the cell A + the cell B or the cell A + the cell C in addition to the scheduling information for the scheduling cell (i.e., the cell A). In other words, mcif may indicate whether the scheduling information is the single cell scheduling information for the cell B or cell C or the multi-cell scheduling information for both the cell A and the cell B or both the cell A and the cell C.

As another example, the scheduled cell may be configured to be always scheduled to include the scheduling cell. In other words, unlike the foregoing example where the mcif-Presence is configured through the cross-carrier scheduling configuration for the scheduling cell and thus the multi-cell scheduling is dynamically indicated by the DCI, the multi-cell scheduling in this example may be configured through the cross-carrier scheduling configuration for the scheduled cell. When the multi-cell scheduling is configured for the scheduled cell, the scheduling DCI for the scheduled cell may be defined to always include the scheduling control information for the scheduling cell. For example, when the cell A, the cell B, and the cell C are set for a terminal, the cell A may be configured as a scheduling cell, and the cell B and the cell C may be configured as scheduled cells. Further, the base station may include the multi-cell scheduling configuration information in addition to schedulingCellID information and cif-inschedulingCell information through the cross-carrier scheduling configuration information for the cell B or the cell C. Therefore, according to whether the multi-cell scheduling is configured, it is determined whether the scheduled cell is scheduled through the single cell scheduling as before or scheduled through the multi-cell scheduling together with the scheduling cell. In other words, when the multi-cell scheduling is not configured, and the CIF of the scheduling DCI transmitted through the cell A indicates the cell B or the cell C as before, each DCI includes only the single cell scheduling information for the cell B or the cell C. On the other hand, when the multi-cell scheduling is configured for a scheduled cell, the scheduled cell may be scheduled together with the scheduling cell, i.e., the cell A. For example, when the multi-cell scheduling is configured for the cell B through the cross-carrier scheduling configuration information, the scheduling control information for the cell B may include the scheduling control information for the scheduling cell (e.g., the cell A). In other words, when the cif of the scheduling DCI transmitted through the cell A indicates the cell B, the scheduling DCI may be defined to include the scheduling information for the cell A together with the scheduling information for the cell B.

The embodiment described above is a method of supporting the multi-cell scheduling only for two cells: the scheduling cell and the scheduled cell.

In accordance with another embodiment, the number of cells to be scheduled through one scheduling DCI or the maximum number of cells may be configured by the base station upon multi-cell scheduling. For example, for a scheduling cell, the number of cells to be scheduled through one scheduling DCI transmitted through the scheduling cell may be configured, or the maximum number of cells to be scheduled may be configured. In other words, when the number of cells is configured, the scheduling DCI transmitted through the scheduling cell includes the scheduling control information corresponding to the configured number of cells. For example, when two cells are configured, the scheduling DCI transmitted through the scheduling cell includes the scheduling control information for each of the two cells (e.g., two pieces of scheduling control information) . Here, one of the two cells may include the scheduling cell.

To this end, the base station may configure the multi-cell scheduling for a terminal through the RRC signaling. In this case, one scheduling DCI may include configuration information about the number of cells to be scheduled through the one scheduling DCI. Further, the RRC signaling or message for the multi-cell scheduling configuration may include cgif-inschedulingcell information. The cell group indication field (cgif) refers to cell group information indicated by the scheduling DCI, in which one cell group includes cells corresponding to a previously configured number of cells. For example, when four cells, such as a cell A, a cell B, a cell C, and a cell D, are configured for a terminal, and the cell A is configured as the scheduling cell, the base station may configure the cell A as the scheduling cell through the RRC message for the multi-cell scheduling configuration. In this case, an N value may be set as the configuration information for the number of cells to be scheduled through one scheduling DCI transmitted through the cell A. For example, if N=3, it means that three cells are scheduled through one scheduling DCI, and thus a payload size of the scheduling DCI is determined. Further, the multi-cell scheduling information for the cell B, the cell C, and the cell D includes cgif configuration information together with the scheduling cell ID for performing the scheduling for each cell. In this case, one or more pieces of cgif information may be configured for one cell. In other words, one cell may belong to one or more cell groups. Therefore, the scheduling DCI transmitted from the scheduling cell (e.g., the cell A) includes the cgif, and the cell group to be scheduled is indicated through that DCI transmitted including the cgif. In this case, all the cell groups may be defined to include the scheduling cell.

As described above, the maximum number of cells to be scheduled through single DCI may be configured through the multi-cell scheduling configuration information. In this case, the maximum number of cells (e.g., Nmax) may be configured equally to the maximum number of cells to be scheduled through single DCI, and one cell group may include the cell(s), the number of which is smaller than or equal to Nmax. The maximum number of cells (e.g., Nmax) may be configured through the RRC message for the multi-cell scheduling. When the number of cells, (e.g., the maximum number of cells) to be scheduled through single DCI is configured, the RRC signaling for the multi-cell scheduling configuration may be applied in the same way except that the maximum number of cells (e.g., Nmax) is configured instead of the number of cells (e.g., N) .

In other words, when the maximum number of cells to be scheduled through single DCI is defined as '4', a set of cells, which includes up to 4 cells, may be configured for a terminal. For example, one set of cells, which includes the cell A, the cell B, the cell C, and the cell D, may be configured for a terminal, and may be defined to indicate group information about cells to be scheduled together (i.e., co-scheduled cells) among the cell A, the cell B, the cell C, and the cell D through one multi-cell scheduling DCI format (i.e., information about a combination of co-scheduled cells. Grouping information about co-scheduled cells may be configured through the RRC signaling as described above. With this, any co-scheduled cell group (or combination) may be tabulated as shown in the following Table 5. In other words, the base station may indicate a table index through the cgif indicated based on the multi-cell scheduling DCI format, and thus indicate a cell group in which a co-scheduled cell combination is scheduled through that DCI.

**[Table 6]**

| index | Co-scheduled cell combination |
|---|---|
| 0 | Cell A, cell B, cell C, cell D |
| 1 | Cell A, cell B, cell C |
| 2 | Cell A, cell B, cell D |
| 3 | Cell A, cell C, cell D |
| 4 | Cell B, cell C, cell D |
| 5 | Cell A, cell B |
| 6 | Cell A, cell C |
| 7 | Cell A, cell D |
| 8 | Cell B, cell C |
| 9 | Cell B, cell D |
| 10 | Cell C, Cell D |

As described above, the payload size of the multi-cell scheduling DCI format may be determined based on the maximum number of cells to be co-scheduled through the corresponding DCI to be described later in the method of the following second disclosure (i.e., the maximum number of cells that constitute the co-scheduled cell combination of FIG. 6). Specifically, the payload size of the multi-cell scheduling DCI format may be determined based on the maximum number of cells and the maximum payload size determined by the active DL or UL BWP of the corresponding cells.

Further, as described above, the multi-cell scheduling configuration may be transmitted in the form of a cross-carrier scheduling configuration RRC message, or the RRC message may be defined for separate multi-cell scheduling.

### II. Second disclosure: Method of dynamically scheduling multiple cells based on a bitmap

Without the separate cell grouping unlike first disclosure, it may be defined to transmit cell indication information for performing dynamic scheduling through the DCI.

To this end, a single scheduling DCI for multi-cell scheduling may be defined to include cell indication information for indicating cells to be scheduled through the single scheduling DCI, and the cell indication information may be bitmap information. In other words, when the CA is configured for a terminal, a scheduling cell may be configured for the multi-cell scheduling by the base station. Thus, when a cell is configured as a scheduling cell for the multi-cell scheduling, the base station may transmit the multi-cell scheduling DCI, which includes the scheduling control information about one or more cells, through the scheduling cell. The multi-cell scheduling DCI includes the bitmap information for indicating one or more cells to be scheduled through that DCI. In this case, a bitmap size for indicating one or more cells may be included in the RRC message for the multi-cell scheduling configuration.

For example, bitmap size configuration information may be transmitted directly, or the configuration information about the maximum number of cells to be scheduled through a single DCI (e.g., Nmax) may be transmitted, so that the corresponding bitmap size and the corresponding payload size of the multi-cell scheduling DCI can be determined.

In other words, i) the bitmap size configuration information may be directly transmitted to the terminal through the RRC message, or ii) the configuration information about the maximum number of cells (e.g., Nmax) to be scheduled through single DCI may be transmitted to the terminal through the RRC message, so that the bitmap size can be determined based on the maximum number of cells (e.g., Nmax). In addition, the payload size of the multi-cell scheduling DCI may also be determined based on the bitmap size.

The cell to be scheduled through the multi-cell scheduling DCI (i.e., the scheduled cell) is also configured through the RRC message for the multi-cell scheduling. In this case, the configuration information for the scheduled cell may include i) scheduling cell ID information transmitted through multi-cell scheduling DCI, ii) information on a position of a bit indicating the scheduled cell within the bitmap, and iii) information on a location for transmitting the corresponding resource allocation information regions. In summary, the configuration information for the scheduled cell may include i) the scheduling cell ID information, ii) the location information on the bit indicating the scheduled cell, and iii) the information about the location of transmitting which the resource allocation information regions.

Here, the multi-cell scheduling RRC message may be defined as a separate RRC message as a variation of the previously mentioned cross-carrier scheduling RRC message.

In addition, the multi-cell scheduling may be restricted to scheduled cells configured for the cross-carrier scheduling and scheduled by the scheduling cell. For example, when the cells #A, #B, and #C are aggregated in a terminal and multi-cell scheduling is configured for those three cells, the multi-cell scheduling DCI for #A, #B, and #C may be defined to be transmitted only from a single scheduling cell based on the cross-carrier scheduling configuration. This may correspond to a case where a scheduling cell transmits the multi-cell scheduling DCI for the plurality of scheduled cells by using the aforementioned method.

Furthermore, this may include a case where the plurality of scheduling cells transmit the multi-cell scheduling DCI for the plurality of scheduled cells. In other words, one or more cells may serve as both the scheduling cell of the multi-cell scheduling and the scheduled cells. For example, when the cells #A, #B, and #C are aggregated in a terminal and the multi-cell scheduling is configured for the three cells, each of the cells #A, #B, and #C may transmit the multi-cell scheduling DCI for the three cells without separate cross-carrier scheduling. Even in this case, multi-cell scheduling control information may be transmitted and received by using the aforementioned method except for the parts related to the cross-carrier scheduling configuration.

### III. Third disclosure: Combination of methods based on first and second disclosures

The "method of dynamically scheduling multiple cells based on the cell group indicator" described in the first disclosure and the "method of dynamically scheduling multiple cells based on the bitmap" described in the second disclosure may be implemented in combination. For example, the bitmap information included in the DCI transmitted from the base station to the terminal may indicate cell group identification information.

### <Embodiments of the present specification >

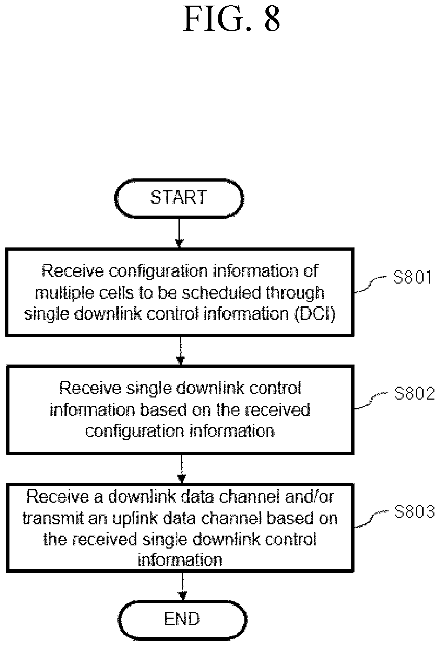

**FIG. 8** **illustrates an operation method of a terminal** according to an embodiment of the present specification.

Referring to FIG. 8, a terminal receives configuration information of multiple cells to be scheduled through single downlink control information (DCI) from a base station (S801). Here, the configuration information of multiple cells may be received from the base station through a radio resource control (RRC) message.

Then, the terminal receives the single DCI for the multiple cells, based on the configuration information of multiple cells received from the base station (S802). The received single DCI may include information for identifying the multiple cells. Here, the information for identifying the multiple cells may be cell group indication information that indicates the multiple cells, which may also be bitmap-based information.

The terminal receives a downlink data channel and/or transmits an uplink data channel based on the received single DCI (S803). Here, the downlink data channel may be a PDSCH, and the uplink data channel may be a PUSCH.

Meanwhile, the terminal receives the configuration information of multiple cells scheduled through the single DCI from the base station. The number of cells may be smaller than or equal to the maximum number of cells to be scheduled through the single DCI.

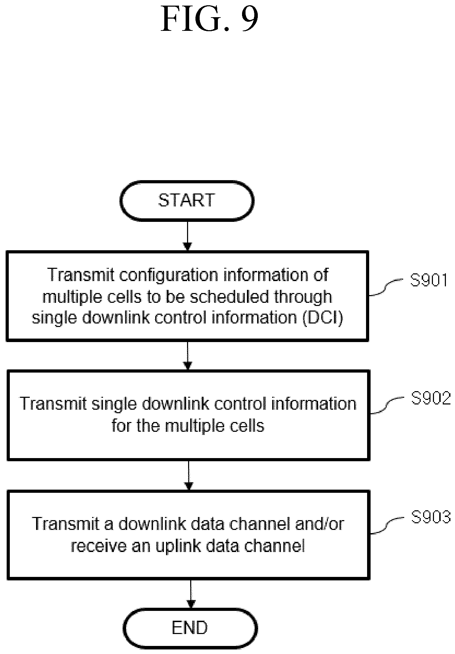

**FIG. 9** **illustrates an operation method of a base station according to an embodiment of the present specification.**

Referring to FIG. 9, a base station transmits configuration information of multiple cells to be scheduled through single downlink control information (DCI) to a terminal (S901). Here, the configuration information of multiple cells may be transmitted to the terminal through a radio resource control (RRC) message.

After transmitting the configuration information of multiple cells to the terminal, the base station transmits the single DCI for the multiple cells (S902). The transmitted single DCI may include information identifying the multiple cells. The information identifying the multiple cells may be cell group indication information that indicates the multiple cells. Further, the information may be bitmap-based information.

After transmitting the single DCI for the multiple cells, the base station transmits a downlink data channel and/or receives an uplink data channel (S903). The downlink data channel may be a PDSCH, and the uplink data channel may be a PUSCH.

Meanwhile, the base station transmits the configuration information of the multiple cells scheduled through the single DCI to the terminal. The number of cells may be smaller than or equal to the maximum number of cells to be scheduled through the single **DCI.**

### <Apparatuses to which the Disclosure is applicable>

The embodiments described up to now may be implemented through various means. For example, the embodiments may be implemented by hardware, firmware, software, or a combination thereof. Details will be described with reference to the accompanying drawings.

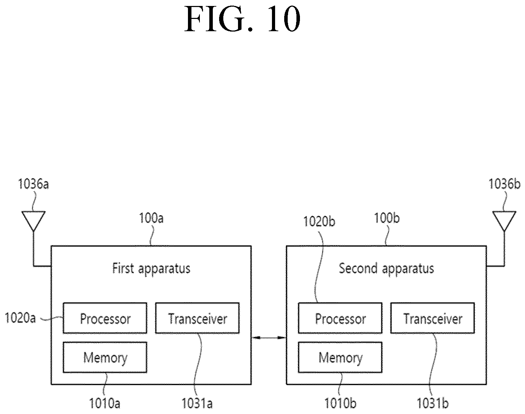

**FIG. 10** **shows apparatuses according to an embodiment of the disclosure.**

Referring to FIG. 10, a wireless communication system may include a first apparatus 100a and a second apparatus 100b.

The first apparatus 100a may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a, and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

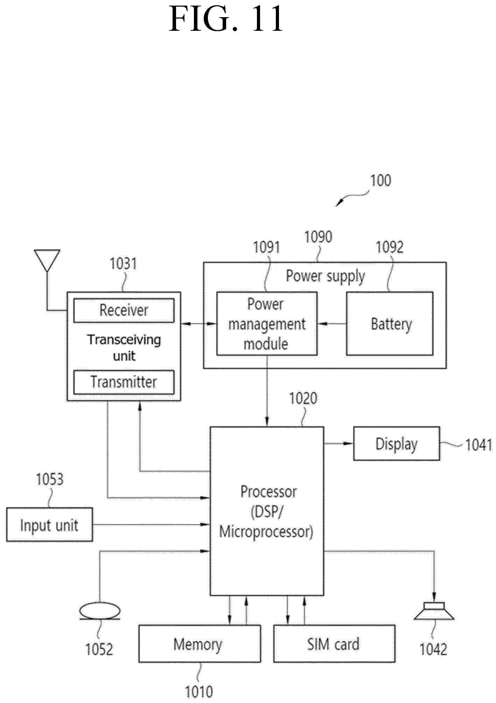

**FIG. 11** **is a block diagram showing a configuration of a terminal according to an embodiment of the disclosure.**

In particular, FIG. 11 illustrates the foregoing apparatus of FIG. 10 in more detail.

The apparatus includes a memory 1010, a processor 1020, a transceiving unit 1031, a power management module 1091, a battery 1092, a display 1041, an input unit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

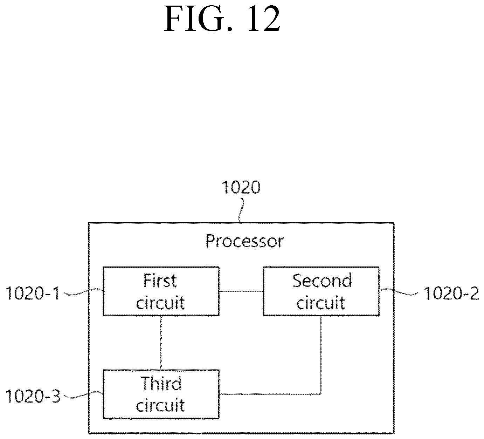

**FIG. 12** **is a configuration block diagram of a processor in which the disclosure is implemented.**

As can be seen with reference to FIG. 12, a processor 1020 in which the disclosure of the present specification is implemented may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP), and may include at least one of a digital signal processor (DSP), a central processing unit (CPU), and a graphics processing unit (GPU).

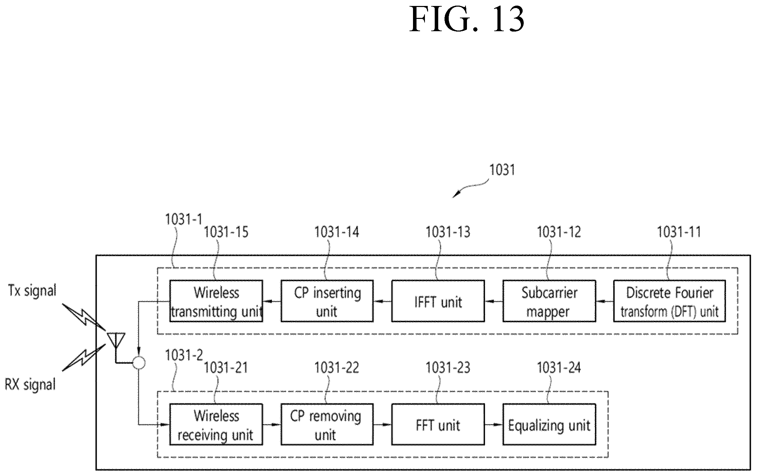

**FIG. 13** **is a detailed block diagram of a transceiver of a first apparatus shown in** **FIG. 10** **or a transceiving unit of an apparatus shown in** **FIG. 11****.**

Referring to FIG. 13, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for a terminal to receive downlink control information in a wireless communication system, the method comprising:
receiving configuration information of multiple cells to be scheduled through single downlink control information (DCI);
receiving the single DCI for the multiple cells, based on the received configuration information; and
receiving a downlink data channel and/or transmitting an uplink data channel based on the received single DCI,
wherein the number of multiple cells is smaller than or equal to a maximum number of cells to be scheduled through the single DCI.

2. The method of claim 1, wherein the single DCI comprises information identifying the multiple cells.

3. The method of claim 2, wherein the information identifying the multiple cells is cell group indication information that indicates the multiple cells.

4. The method of claim 2, wherein the information identifying the multiple cells is bitmap-based information.

5. The method of claim 1, wherein the configuration information of the multiple cells is received through a radio source control (RRC) message.

6. The method of claim 1, wherein a payload size of the single DCI is based on the maximum number of cells to be scheduled through the single DCI.

7. A method for a base station to transmit downlink control information in a wireless communication system, the method comprising:
transmitting configuration information for identifying multiple cells to be scheduled through single DCI;
transmitting the single DCI for the multiple cells, after transmitting the configuration information; and
transmitting a downlink data channel and/or receiving an uplink data channel, after transmitting the single DCI,
wherein the number of multiple cells is smaller than or equal to a maximum number of cells to be scheduled through the single DCI.

8. The method of claim 7, wherein the single DCI comprises information identifying the multiple cells.

9. The method of claim 8, wherein the information identifying the multiple cells is cell group indication information that indicates the multiple cells.

10. The method of claim 8, wherein the information identifying the multiple cells is bitmap-based information.

11. The method of claim 7, wherein the configuration information of the multiple cells is transmitted through a radio source control (RRC) message.

12. The method of claim 7, wherein a payload size of the single DCI is based on the maximum number of cells to be scheduled through the single DCI.

13. A communication device in a wireless communication system, comprising:
at least one processor; and
at least one memory configured to store instructions and operably electrically connectable to the at least one processor, wherein operations performed based on the instructions executed by the at least one processor comprise:
receiving configuration information of multiple cells to be scheduled through single downlink control information (DCI);
receiving the single DCI for the multiple cells, based on the received configuration information; and
receiving a downlink data channel and/or transmitting an uplink data channel based on the received single DCI, wherein the number of multiple cells is smaller than or equal to a maximum number of cells to be scheduled through the single DCI.

14. A base station in a wireless communication system, comprising:
at least one processor; and
at least one memory configured to store instructions and operably electrically connectable to the at least one processor, wherein operations performed based on the instructions executed by the at least one processor comprise:
transmitting configuration information for identifying multiple cells to be scheduled through single downlink control information (DCI);
transmitting the single DCI for the multiple cells, after transmitting the configuration information; and
transmitting a downlink data channel and/or receiving an uplink data channel, after transmitting the single DCI, wherein the number of multiple cells is smaller than or equal to a maximum number of cells to be scheduled through the single DCI.

15. A computer readable storage medium storing instructions that, when executed by one or more processors, cause the one or more processors to:
receive configuration information of multiple cells to be scheduled through single downlink control information (DCI);
receive the single DCI for the multiple cells, based on the received configuration information; and
receive a downlink data channel and/or transmit an uplink data channel based on the received single DCI, wherein the number of multiple cells is smaller than or equal to a maximum number of cells to be scheduled through the single DCI.
